# FASCICULE DE BREVET EUROPEEN

(11) **EP 0 663 592 B1**
(45) Date de publication et mention de la délivrance du brevet: **18.12.2002**
(21) Numéro de dépôt: 95400022.0
(22) Date de dépôt: 05.01.1995
(51) Int. Cl.: G01N 21/53, G01N 15/02, G01P 5/00, G01W 1/00

(54) **Procédé et capteur de mesure de la concentration volumique en eau liquide dans un gaz en mouvement**
Verfahren und Sensor zur Bestimmung der volumetrischen Konzentration von flüssigem Wasser in einem sich bewegenden Gas
Method and sensor for measuring the volumetric concentration of liquid water in a moving gas

(30) Priorité: 13.01.1994 FR 9400314
(43) Date de publication de la demande: 19.07.1995
(73) Titulaire: THALES AVIONICS S.A., 78140 Vélizy-Villacoublay (FR)
(72) Inventeur: Breda, Jean-Marc, F-75015 Paris (FR)
(74) Mandataire: Geismar, Thierry

(56) Documents cités:
- EP-A- 0 467 127
- WO-A-90/05310
- FR-A- 2 642 839
- APPLIED PHYSICS B. PHOTOPHYSICS AND CHEMISTRY, vol.43, 1987, HEIDELBERG DE pages 209 - 224 Y. AIZU ET AL. 'PRINCIPLES AND DEVELOPMENT OF SPATIAL FILTERING VELOCIMETRY'
- JOURNAL OF THE OPTICAL SOCIETY OF AMERICA, vol.53, no.12, Décembre 1963, NEW YORK US pages 1416 - 1422 J.T. ATOR 'IMAGE-VELOCITY SENSING WITH PARALLEL-SLIT RETICLES'
- JOURNAL OF OPTICS, vol.20, no.4, 1989, PARIS FR pages 145 - 156 J. RITONGA ET AL. 'MEASUREMENTS OF TWO-DIMENSIONAL VECTOR VELOCITY USING IMAGE FIBER BUNDLE AND TWO ROTATING GRATINGS'
- APPLIED OPTICS, vol.20, no.8, 15 Avril 1981, NEW YORK US pages 1367 - 1373 JAMES C. F. WANG ET AL. 'PARTICLE SIZE MEASUREMENTS USING AN OPTICAL VARIABLE-FREQUENCY-GRID TECHNIQUE'
- PATENT ABSTRACTS OF JAPAN vol. 10, no. 382 (P-529) (2439) 20 Décembre 1986 & JP-A-61 172 032 (MEISEI ELECTRIC CO LTD)
- IBM TECHNICAL DISCLOSURE BULLETIN, vol.28, no.1, Juin 1985, NEW YORK US pages 331 - 332 'IMPROVED DETECTION OF CONTAMINATING PARTICLES IN FLUIDS'
- OPTICS COMMUNICATIONS, vol.64, no.3, 1 Novembre 1987, AMSTERDAM NL pages 205 - 210 Y. AIZU ET AL. 'A LASER VELOCIMETER USING A RANDOM PATTERN'

## Description

La présente invention concerne un capteur de mesure de la concentration volumique en eau liquide dans un gaz en mouvement par rapport audit capteur. Elle est en particulier applicable à la détermination de la sévérité des conditions givrantes à bord d'un aéronef.

Il est important pour le pilote d'un aéronef de connaître la sévérité des conditions givrantes afin soit d'éviter les zones à risque, soit d'enclencher les dispositifs anti-givrage. En effet, le givre qui s'accumule notamment sur les bords d'attaque des ailes ou de l'empennage ou à l'entrée d'air des moteurs, provoque un alourdissement de l'appareil nuisant à ses performances, une perte de portance pouvant aller jusqu'au décrochage, ainsi qu'un étouffement du moteur.

Le phénomène de givrage se rencontre lors de la traversée de nuages, lorsque certaines conditions particulières sont rencontrées.

En premier lieu, rien ne se passe lors de la traversée d'un nuage de glace. Le givrage ne peut se rencontrer que lors de la traversée d'un nuage formé de gouttes d'eau liquide. Par ailleurs, la température statique doit être négative; le liquide est donc alors en état surfondu. Enfin, la concentration en eau liquide surfondue doit être suffisante, et la température de paroi de l'aéronef également négative.

Les dispositifs actuellement connus pour détecter la sévérité du risque de givrage sont généralement fondés sur la mesure de la vitesse d'accrétion du givre.

Dans un premier type de dispositifs, on laisse le givre s'accumuler sur un barreau faisant saillie de l'appareil, et dont on entretient les vibrations. La fréquence de ces vibrations est fonction de l'épaisseur de glace recouvrant le barreau et diminue en même temps que cette épaisseur. Lorsque la fréquence de vibration atteint un certain seuil, on réchauffe le barreau, ce qui provoque bien entendu une fusion du givre et donc une augmentation de la fréquence.

Lorsque celle-ci atteint sa valeur nominale, on interrompt le chauffage ce qui provoque une nouvelle accrétion de glace et donc une nouvelle diminution de la fréquence de vibration. La durée d'un tel cycle, c'est-à-dire la durée séparant deux instants de mise en marche du chauffage, caractérise par conséquent la vitesse d'accrétion du givre et donc la sévérité des conditions givrantes.

Dans un autre type de dispositifs, des trous sont formés à la surface d'un organe en saillie de l'appareil et sont reliés à un manomètre; un système de chauffage est prévu comme dans le cas précédent. Le phénomène d'accrétion de glace entraîne un bouchage progressif des trous et par conséquent une diminution de la pression enregistrée par le manomètre. Lorsque cette pression atteint un seuil inférieur, on chauffe le dispositif pour éliminer la glace et on interrompt le chauffage lorsque la pression atteint de nouveau un seuil supérieur. Comme précédemment, l'intervalle de temps séparant deux mises en marche du chauffage caractérise la vitesse d'accrétion et donc la sévérité des conditions givrantes.

Ces dispositifs présentent un certain nombre d'inconvénients.

En premier lieu, leur temps de réponse est très long, de l'ordre de la minute. Il est en effet nécessaire d'attendre au moins deux cycles de chauffage pour connaître la durée qui les sépare. En outre, on ne dispose d'aucune information pendant le chauffage.

Par ailleurs, ils ne fonctionnent pas par définition si la température est positive puisqu'il n'y a pas alors accrétion de glace. Or, les conditions givrantes peuvent être sévères alors même que la température est positive, puisqu'elle peut être négative à un autre emplacement de l'aéronef (par exemple dans une entrée d'air à cause de la détente).

La présente invention vise à palier ces inconvénients en fournissant des moyens permettant de connaître la concentration en eau liquide qui constitue, avec la température, l'un des critères essentiels du risque de givrage.

A cet effet, l'invention a tout d'abord pour objet un procédé de mesure de la concentration volumique en eau liquide dans un gaz en mouvement, tel que défini dans la revendication 1.

Lorsqu'une gouttelette d'eau traverse le volume de mesure, elle rétrodiffuse un peu de lumière. Son image sur le réseau optique apparaît donc comme un point lumineux mobile. Par conséquent le photodétecteur captera un signal lumineux modulé temporellement.

La fréquence d'apparition d'une gouttelette d'eau dans le volume de mesure est fonction du nombre de gouttelette par unité de volume. Par ailleurs, l'amplitude du signal modulé est fonction de la dimension, des gouttelettes. On peut donc déduire de ces deux paramètres, la concentration en eau, le dispositif selon l'invention permettant d'obtenir en outre un troisième paramètre qui est constitué par la vitesse relative des gouttes par rapport au capteur. Cette vitesse est en effet directement liée à la fréquence de modulation du signal reçu par le photodétecteur.

On observera que des procédés quelque peu similaires existent pour la mesure de la vitesse de déplacement de particules. De tels procédés sont par exemple décrits dans l'article "Principles and Development of Spatial Filtering Velocimetry" publié dans Applied Physics B. Photophysics and Chemistry vol. 43, 1987 pages 209-224 ou dans le document EP-A-0 467 127. Mais il n'a pas été suggéré de déduire la concentration du rayonnement détecté.

L'invention a également pour objet un capteur de mesure de la concentration volumique en eau liquide dans un gaz en mouvement par rapport audit capteur, tel que défini dans la revendication 2.

Les moyens d'éclairage peuvent comprendre une diode laser ou une, diode électro-luminescente. Il n'est en effet pas nécessaire d'utiliser une source cohérente. Le réseau optique peut comprendre au moins un ensemble de barres opaques parallèles. On obtiendra alors un signal à fréquence constante et dont l'amplitude varie de façon continue.

Dans un autre mode de réalisation, on peut toutefois prévoir plusieurs ensembles de barres opaques parallèles, les barres des différents ensembles n'étant pas parallèles entre elles. On obtient alors un signal dont la fréquence varie brutalement lorsque l'image d'une gouttelette passe d'une zone du réseau formé d'un premier ensemble de barres à une autre zone formée d'un autre ensemble de barres. On peut en déduire les deux composantes de la vitesse de la goutte d'eau, dans les directions des deux ensembles de barres.

Il est également possible de prévoir sur le réseau optique au moins un ensemble de barres opaques non parallèles'entre elles. Dans ce cas, on obtient un signal dont la fréquence varie de façon continue. Cette variation permet de déterminer l'incidence de la trajectoire de la goutte par rapport au réseau.

Les barres opaques du réseau peuvent avoir toute la même largeur. Toutefois, dans un mode de réalisation particulier, le réseau comprend des barres opaques de différentes largeurs. On obtient alors un signal dont le rapport cyclique ou, plus généralement, le rapport des durées des alternances positives aux durées des alternances négatives, varie brutalement lorsque l'image d'une gouttelette d'eau passe d'une zone du réseau à une autre. On peut en déduire le sens du passage de la gouttelette par rapport au réseau.

Egalement dans un mode de réalisation particulier de l'invention, on prévoit sur le trajet de la lumière rétro-diffusée par les gouttes d'eau, des moyens pour polariser la lumière dans une pluralité de directions différentes suivant l'emplacement du réseau ou elle sera focalisée. Si la lumière rétro-diffusée est polarisée, il en résultera généralement une brusque variation de l'amplitude du signal lorsque le faisceau rétro-diffusé passera dune zone de polarisation dans une certaine direction à une zone de polarisation dans une autre direction. Ceci permet particulièrement de faire la distinction entre des gouttelettes d'eau susceptibles de produire du givre et des particules de glace non dangereuses. En effet, la glace polarise la lumière, contrairement à l'eau.

On décrira maintenant des modes de réalisation particulier de l'invention en référence aux dessins annexés dans lesquels :
- la figure 1 représente un capteur selon l'invention,
- la figure 2 illustre le principe de fonctionnement de ce capteur, et
- les figures 3a, 3b à 6a, 6b représentent divers réseaux optiques utilisables ainsi que les signaux auxquels ils conduisent.

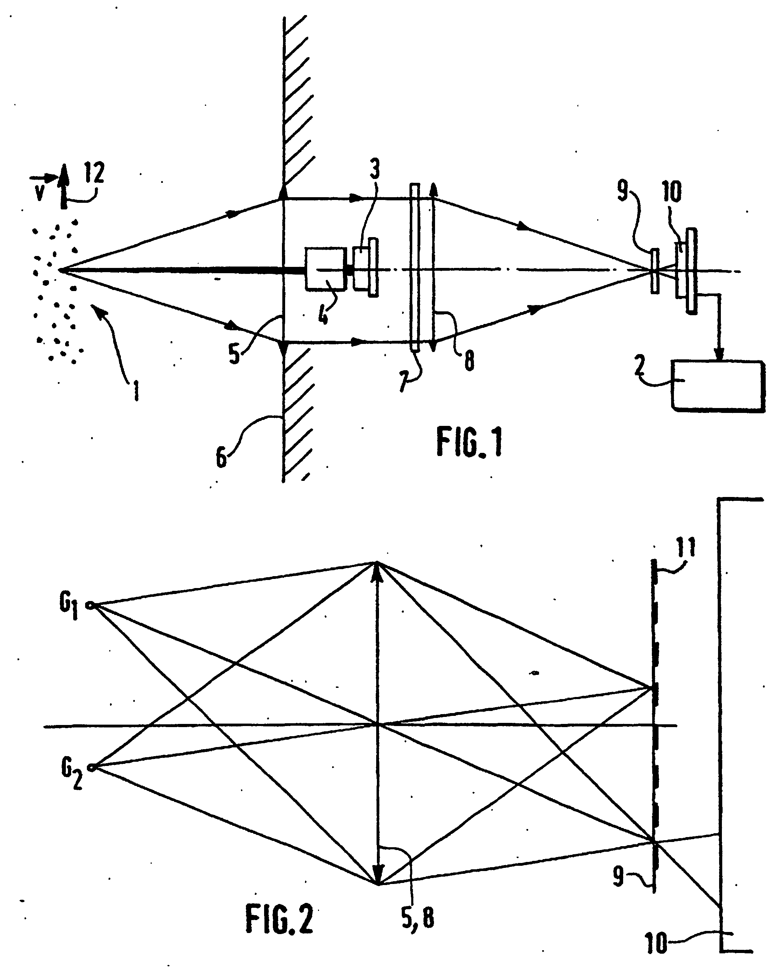

Le dispositif représenté à la figure 1 comprend d'une manière générale une partie émettrice d'un faisceau lumineux vers un gaz 1 chargé en gouttelettes d'eau, une partie réceptrice, et un processeur de traitement 2.

La partie émettrice est composée pour l'essentiel d'une source 3, par exemple une diode laser ou photo-luminescente, d'un collimateur 4 et d'une lentille 5.

Dans le cas d'une application à un aéronef, la lentille 5 se trouve dans le plan de la peau 6 de cette aéronef. L'ensemble constitué par le collimateur 4 et la lentille 5 focalise le faisceau issu de la diode 3 sur un volume de mesure inclus dans la zone 1.

La lentille 5 appartient également à la partie réceptrice. Cette dernière comprend en outre un filtre 7, une lentille 8, un réseau optique 9 qui sera décrit ci-après et un photo-récepteur 10, par exemple une photo-diode. La sortie de la photo-diode 10 est appliquée en entrée du processeur de traitement 2.

Le collimateur 4 et la lentille 5 forment de la source 3 une image formant la zone de mesure. Cette dernière est située par exemple à une dizaine de centimètre de la lentille 5, a un diamètre de l'ordre de 200 micromètres pour une longueur d'environ 1 millimètre. A une vitesse de déplacement du capteur dans l'air d'environ 1000 km/h, ceci revient à traiter à chaque seconde un volume d'environ 10 cm³, contenant typiquement quelque millier de gouttes d'eau. Or, à cette vitesse, le champ de l'appareil est traversé par une goutte d'eau en un temps de l'ordre de la micro-seconde. On constate donc que statistiquement, il n'y aura le plus souvent aucune goutte dans le volume de mesure et pratiquement jamais plus d'une goutte. Le processeur de traitement 2 ne devra donc traiter qu'une goutte à la fois.

Le réseau optique 9 le plus simple est tel que représenté à la figure 2. Il est constitué d'un ensemble de barres opaques 11 équidistantes et parallèles, distantes par exemple de 20 à 40 micromètres.

Lorsque le capteur se déplace dans le sens de la flèche 12 de la figure 1 à la vitesse V, l'image d'une goutte se déplace sur le réseau 9. Par exemple, à deux instants t1 et t2 successifs, une goutte occupe les positions G1 et G2. Dans la position G1, l'image de la goutte est focalisée entre deux barres opaques de sorte que le photo-détecteur 10 est éclairé. En revanche, dans la position G2, l'image de la goutte se forme sur une barre opaque et aucune lumière n'est transmise.

Le signal électrique de sortie du photo-détecteur 10 sera donc dans ce cas un signal à fréquence constante fonction de la distance entre les barres et de la vitesse V. Son amplitude sera fonction de la quantité de lumière rétro-diffusée, donc du diamètre de la goutte et par conséquent de son volume.

Le processeur 2 disposant de la fréquence du signal en déduit la vitesse et par conséquent le volume de mesure. Connaissant la fréquence d'occurrence d'une goutte, il en déduit le nombre de gouttes figurant dans le volume de mesure, c'est-à-dire la concentration en nombre de gouttes. Connaissant par ailleurs l'amplitude du signal, il en déduit la dimension donc le volume moyen d'une goutte. Connaissant donc la fréquence en nombre de gouttes et le volume moyen d'une goutte, il en déduit immédiatement la concentration volumique de gouttelettes d'eau dans l'air ambiant.

La figure 3a montre l'adjonction devant le réseau 9 d'un composant 13 formé de deux polariseurs linéaires 13a et 13b à axes perpendiculaires placés côte à côte. Lorsque l'image d'une goutte d'eau traverse le réseau 9 comme représenté par la flèche 14, cette image subit successivement l'action des polariseurs 13a et 13b. Si l'image de cette goutte n'est pas polarisée, le signal ne subira pas d'altération au passage de la limite entre les deux polariseurs.

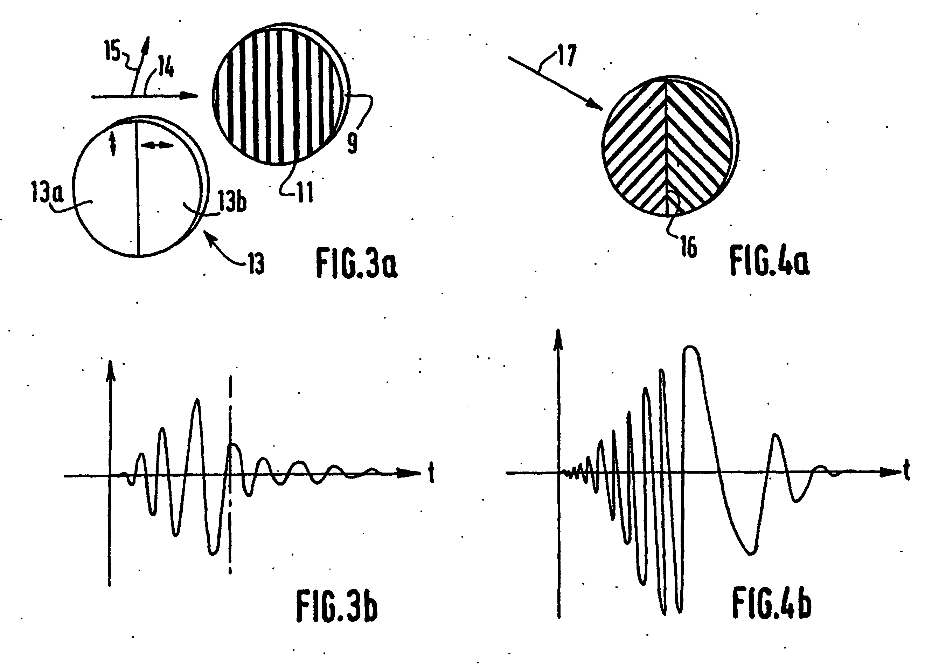

En revanche, si cette image est polarisée comme représentée par la flèche 15, c'est-à-dire ici dans une direction peu différente de la direction de polarisation du polariseur 13a, le signal subit une brusque chute d'intensité au passage de la zone médiane du réseau 9 comme cela est représenté sur la figure 3b.

Le réseau optique utilisé peut par ailleurs être plus complexe que le réseau 9 représenté aux figures précédentes.

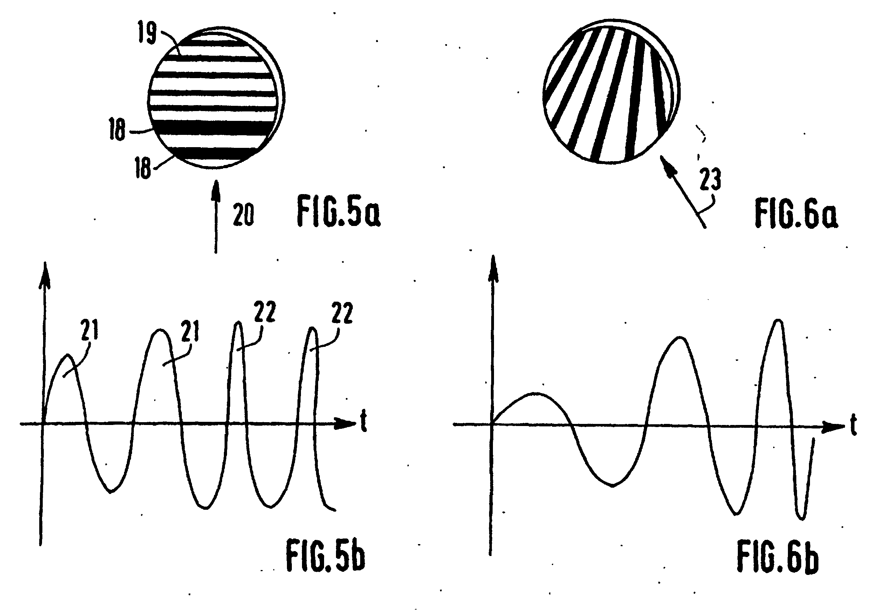

Dans la figure 4a, les barres opaques sont orientées dans deux directions perpendiculaires de part et d'autre de la zone médiane 16 du réseau. Ces barres forment donc des chevrons.

Si l'image d'une gouttelette traverse le réseau selon la direction de la flèche 17 sensiblement perpendiculaire aux barres de la première moitié du réseau traversé, il se produira au passage de la zone médiane une forte diminution de la fréquence comme représenté à la figuré 4b. En effet, pour une vitesse constante l'image de la gouttelette traversera les interfranges de la première zone presque perpendiculairement et donc très rapidement, et les interfranges de la deuxième zone d'une façon très inclinée et donc dans un temps beaucoup plus long.

La figure 5a représente le cas où les deux premières barres traversées 18 sont très larges par rapport aux barres suivantes 19. Si l'image d'une goutte traverse le réseau comme représenté par la flèche 20, les deux premières alternances positives (ou négatives) 21 seront beaucoup plus longues que les alternances positives suivantes 22. En revanche, les alternances négatives conserveront la même durée si l'espacement entre barres est identique. On peut ainsi déterminer le sens dans lequel une gouttelette traverse le champ du capteur, et par conséquent le sens de la vitesse. Ceci peut être en particulier utile dans le cas de la mesure d'une vitesse verticale qui peut être éventuellement négative.

Dans le cas représenté à la figure 6a, les barres opaques ne sont plus parallèles. Elles sont ici sensiblement convergentes en dehors de la surface du réseau. Si l'image d'une goutte traverse ce réseau comme montré par la flèche 23, le temps pour passer d'une barre opaque à la suivante sera de plus en plus court et donc la fréquence du signal va augmenter comme cela est visible sur la figure 6b.

Le dispositif selon l'invention présente de nombreux avantages.

On remarquera tout d'abord que les composants sont d'une grande simplicité. La source n'a pas besoin d'être cohérente, les optiques peuvent être à faible ouverture de sorte que l'on peut utiliser des lentilles simples ou des doublets et l'appareil ne comprend pas de séparateurs optiques. De plus, dans la mesure où la lumière parasite est faible, il est possible d'utiliser un filtre large bande à transmission importante.

Par ailleurs, il est extrêmement facile de modifier les paramètres du réseau pour adapter le capteur à différentes situations.

## Revendications

1. Procédé de mesure de la concentration volumique en eau liquide dans un gaz en mouvement, comprenant les étapes consistant à :
- éclairer les gouttes d'eau traversant un volume de mesure pour former une image du volume de mesure sur un réseau optique ;
- détecter le rayonnement lumineux transmis par le réseau optique ;
- déterminer la vitesse de déplacement des gouttes d'eau à partir de la fréquence de variation dudit rayonnement et en déduire le volume de mesure ;
- déduire la concentration en nombre de gouttes dudit volume de mesure et de la fréquence d'occurrence d'une goutte dans ce volume ;
- déterminer le volume moyen d'une goutte à partir de l'amplitude de la variation dudit rayonnement ; et
- déduire ladite concentration volumique de la concentration en nombre de gouttes et du volume moyen d'une goutte.

2. Capteur de mesure de la concentration volumique en eau liquide dans un gaz en mouvement par rapport audit capteur, comprenant:
- des moyens (3-5) pour éclairer les gouttes d'eau traversant un volume de mesure ;
- un réseau optique (9) ;
- des moyens (5-8) pour former une image du volume de mesure sur ledit réseau optique ;
- des moyens photodétecteurs (10) pour détecter le rayonnement lumineux transmis par le réseau optique ; et
- des moyens de traitement (2) pour déduire ladite concentration du rayonnement détectée,
lesdits moyens de traitement (2) étant agencés pour déterminer la vitesse de déplacement des gouttes d'eau à partir de la fréquence de variation dudit rayonnement et en déduire le volume de mesure, pour déduire la concentration en nombre de gouttes dudit volume de mesure et de la fréquence d'occurrence d'une goutte dans ce volume, pour déterminer le volume moyen d'une goutte à partir de l'amplitude de la variation dudit rayonnement, et pour déduire la concentration volumique de la concentration en nombre de gouttes et du volume moyen d'une goutte.

3. Capteur selon la revendication 2, dans lequel les moyens d'éclairage comprennent une diode électro-luminescente.

4. Capteur selon la revendication 2, dans lequel les moyens d'éclairage comprennent une diode laser.

5. Capteur selon l'une quelconque des revendications 2 à 4, dans lequel le réseau optique comprend au moins un ensemble de barres opaques parallèles.

6. Capteur selon la revendication 5, dans lequel le réseau optique comprend plusieurs ensembles de barres opaques parallèles, les barres des différents ensembles n'étant pas parallèle entre elles.

7. Capteur selon l'une quelconque des revendications 2 à 4, dans lequel le réseau optique comprend au moins un ensemble de barres optiques non parallèles entre elles.

8. Capteur selon l'une quelconque des revendications 6 et 7, comprenant des barres opaques de différentes largeurs.

9. Capteur selon l'une quelconque des revendications 2 à 8, comprenant, sur le trajet de la lumière rétrodiffusé par les gouttes d'eau, des moyens (13) pour polariser la lumière dans une pluralité de directions différentes suivant l'emplacement du réseau où elle sera focalisée.

## Patentansprüche

1. Messverfahren der volumenbezogenen Konzentration von flüssigem Wasser in einem Gas in Bewegung mit folgenden Etappen :
- Beleuchtung der ein Messvolumen durchquerenden Wassertropfen, um ein Bild des Messvolumens auf einem optischen Raster zu erhalten ;
- Detektierung der vom optischen Raster übertragenen Lichtstrahlung ;
- Bestimmung der Versetzungsgeschwindigkeit der Wassertropfen ab der Schwankungsfrequenz der besagten Strahlung und Ableitung davon des Messvolumens ;
- Ableitung der Konzentration in Tropfenanzahl aus dem besagten Messvolumen und der Häufigkeit des Auftretens eines Tropfens in diesem Volumen;
- Bestimmung des mittleren Volumens eines Tropfens ab der Schwankungsamplitude der besagten Strahlung ; und
- Ableitung der besagten volumenbezogenen Konzentration aus der Konzentration in Tropfenanzahl und des mittleren Volumens eines Tropfens.

2. Messwertgeber der volumenbezogenen Konzentration von flüssigem Wasser in einem Gas in Bewegung in Bezug auf den besagten Geber, mit:
- Mitteln (3-5) zum Beleuchten der das Messvolumen durchquerenden Wassertropfen;
- einem optischen Raster (9);
- Mitteln (5-8) zum Erhalten eines Bilds des Messvolumens auf dem besagten optischen Raster;
- lichtempfindlichen Mitteln (10) zum Detektieren der vom optischen Raster übertragenden Lichtstrahlung ; und
- Verarbeitungsmitteln (2) zur Ableitung der besagten Konzentration aus der detektierten Strahlung, wobei die besagten Verarbeitungsmittel (2) so angeordnet sind, dass sie die Versetzungsgeschwindigkeit der Wassertropfen ab der Schwankungsfrequenz der besagten Strahlung bestimmen und daraus das Messvolumen ableiten, um aus dem besagten Messvolumen und der Häufigkeit des Auftretens eines Tropfens in diesem Volumen die Konzentration in Tropfenanzahl abzuleiten, um das mittlere Volumen eines Tropfens ab der Schwankungsamplitude der besagten Strahlung zu bestimmen, und um aus der Konzentration in Tropfenanzahl und dem mittleren Volumen eines Tropfens die volumenbezogene Konzentration abzuleiten.

3. Geber nach Anspruch 2, bei dem die Beleuchtungsmittel eine Lumineszenzdiode umfassen.

4. Geber nach Anspruch 2, bei dem die Beleuchtungsmittel eine Laserdiode umfassen.

5. Geber nach einem der Ansprüche 2 bis 4, bei dem der optische Raster mindestens eine Einheit von parallelen lichtundurchlässigen Balken umfasst.

6. Geber nach Anspruch 5, bei dem der optische Raster mehrere Einheiten von parallelen lichtundurchlässigen Balken umfasst, wobei die Balken der einzelnen Einheiten nicht parallel zueinander verlaufen.

7. Geber nach einem der Ansprüche 2 bis 6, bei dem der optische Raster mindestens eine Einheit von nicht parallel zueinander verlaufenden Balken umfasst.

8. Geber nach einem der Ansprüche 6 und 7, mit lichtundurchlässigen Balken von verschiedener Breiten.

9. Geber nach einem der Ansprüche 2 bis 8, mit auf dem Weg des von den Wassertropfen zurückgestrahlten Lichts angeordneten Mitteln (13), um das Licht in einer Mehrzahl verschiedener Richtungen je nach dem Sitz des Rasters zu polarisieren, wo es fokussiert wird.

## Claims

1. A method for measuring the concentration by volume of liquid water in a moving gas, comprising the steps consisting of:
- illuminating the drops of water passing through a measuring volume in order to form an image of the measuring volume on an optical grating ;
- detecting the light radiation transmitted by the optical grating ;
- determining the speed of movement of the drops of water from the frequency of variation of the said radiation and deriving the measuring volume therefrom ;
- deriving the concentration in terms of the number of drops of the said measuring volume and of the frequency of occurrence of a drop in this volume;
- determining the average volume of a drop from the magnitude of the variation of the said radiation ; and
- deriving the said concentration by volume from the concentration in terms of number of drops and the average volume of a drop.

2. A sensor for measuring the concentration by volume of liquid water in a moving gas with respect to the said sensor, comprising :
- means (3-5) for illuminating the drops of water passing through a measuring volume;
- an optical grating (9);
- means (5-8) for forming an image of the measuring volume on the said optical grating;
- photodetector means (10) for detecting the light radiation transmitted by the optical grating ; and
- processing means (2) for deriving the said concentration from the detected radiation, the said processing means being arranged to determine the speed of movement of the drops of water from the frequency of variation of the said radiation and deriving therefrom the measuring volume, in order to derive the concentration in terms of number of drops of the said measuring volume and of the frequency of occurrence of a drop in this volume, in order to determine the average volume of a drop from the magnitude of the variation of the said radiation, and to derive the concentration by volume from the concentration in terms of number of drops and the average volume of a drop.

3. A sensor according to Claim 2, in which the illumination means comprise a light-emitting diode.

4. A sensor according to Claim 2, in which the illumination means comprise a laser diode.

5. A sensor according to any one of Claims 2 to 4, in which the optical grating comprises at least one set of parallel opaque bars.

6. A sensor according to Claim 5, in which the optical grating comprises several sets of parallel opaque bars, the bars in the various sets not being parallel to each other.

7. A sensor according to any one of Claims 2 to 6, in which the optical grating comprises at least one set of optical bars which are not parallel to each other.

8. A sensor according to either one of Claims 6 and 7, comprising opaque bars with different widths.

9. A sensor according to any one of Claims 2 to 8, comprising, on the path of the light backscattered by the drops of water, means (13) for polarizing the light in a plurality of different directions according to the position on the grating where it will be focused.
